(19) Europäisches Patentamt
European Patent Office
Office européen des brevets

(11) Veröffentlichungsnummer : **0 158 098**
**B1**

# (12) EUROPÄISCHE PATENTSCHRIFT

(45) Veröffentlichungstag der Patentschrift : **23.12.87**

(51) Int. Cl.[4] : **C 09 B 67/22**, C 09 B 56/02

(21) Anmeldenummer : **85102289.7**

(22) Anmeldetag : **01.03.85**

## (54) Mischungen von 1:2-Chromkomplexfarbstoffen.

(30) Priorität : **13.03.84 DE 3409082**

(43) Veröffentlichungstag der Anmeldung : **16.10.85 Patentblatt 85/42**

(45) Bekanntmachung des Hinweises auf die Patenterteilung : **23.12.87 Patentblatt 87/52**

(84) Benannte Vertragsstaaten : **CH DE FR GB LI**

(56) Entgegenhaltungen :
**EP-A- 0 073 951**
**FR-A- 2 285 441**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Mennicke, Winfried, Dr.**
**Steglitzerstrasse 8**
**D-5090 Leverkusen 1 (DE)**
Erfinder : **Westphal, Jochen, Dr.**
**Am Rittersberg 43**
**D-4000 Düsseldorf 13 (DE)**

**EP 0 158 098 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind Mischungen aus Farbstoffen der Formel I

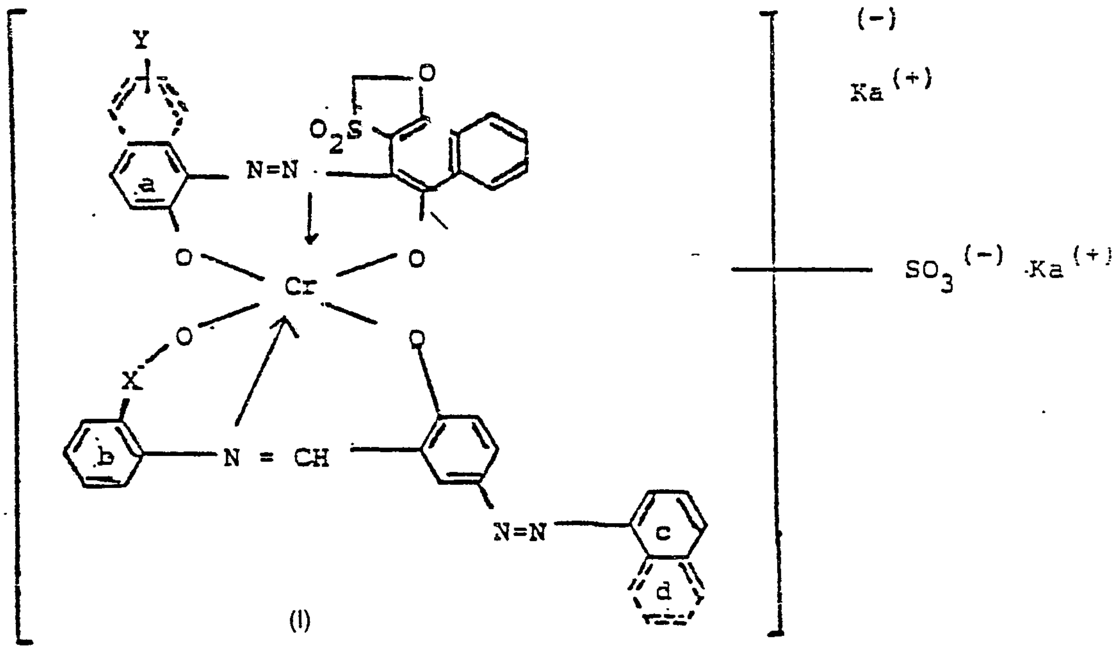

(I)

worin

X für CO oder eine direkte Bindung

Y für H oder $NO_2$ stehen,

Ring a durch Sulfonamid, $C_1$-$C_4$-Alkylsulfonyl, Cl, $NO_2$, $C_1$-$C_4$-Alkyl oder Acylamino,

Ring b durch Sulfonamid, Cl, $NO_2$, oder $C_1$-$C_4$-Alkyl

Ring c durch Sulfonamid, Cl, $C_1$-$C_4$-Alkyl oder $C_1$-$C_4$-Alkoxy substituiert sein kann, die $SO_3^{(-)}Ka^{(+)}$-Gruppe an den Ringen a, b, c und d gebunden sein kann und $Ka^{(+)}$ ein Kation bedeutet, beispielsweise ein Alkali-, vorzugsweise Natrium-, Kalium- oder Lithiumkation, ein Ammoniumion oder das Kation eines organischen Amins,

und 1 : 2-Chromkomplexverbindungen von Farbstoffen der Formel II

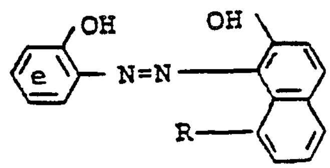

(II)

worin R für H oder Acylamino steht, und Ring e durch Sulfonamid, $C_1$-$C_4$-Alkylsulfonyl, Cl, $NO_2$, $C_1$-$C_4$-Alkyl oder Acylamino substituiert sein kann.

Sulfonamid kann dabei mono- oder disubstituiert sein, insbesondere durch $C_1$-$C_4$-Alkyl ; Acylamino steht vorzugsweise für $C_1$-$C_4$-Alkylcarbonylamino, $C_1$-$C_4$-Alkoxycarbonylamino, $C_1$-$C_4$-Alkylsulfonylamino ; Alkyl kann gegebenenfalls substituiert sein, insbesondere durch OH, Cl und CN.

Die 1 : 2-Chromkomplexfarbstoffe der Formel (I) sind bekannt, beispielsweise aus der Deutschen Offenlegungsschrift 3 133 505, wo auch ihre Herstellung beschrieben ist.

Bevorzugte Farbstoffe der Formel (I) sind solche der Formel

(Siehe Formel III Seite 3 f.)

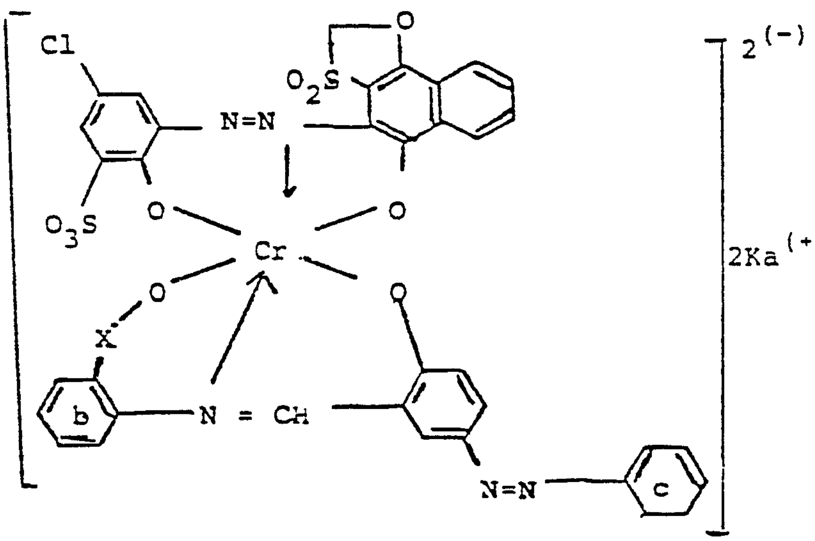

(III)

worin für X, $Ka^{(+)}$ und den Ringen b und c das obengenannte gilt.

Die Chromkomplexverbindungen von Farbstoffen der Formel (II) sind ebenfalls bekannt und in zahlreichen Patentschriften erwähnt, beispielsweise in der Deutschen Offenlegungsschrift 2 444 736.

Die schwarze oder graue Komponente (II) besteht vorzugsweise aus drei 1 : 2-Chromkomplexen, wie sie bei der Mischchromierung von zwei voneinander verschiedenen Farbstoffen der Formel (II) entstehen, also im Falle einer Chromierung von (II)-A und (II)-B aus dem symmetrischen Komplex von (II)-A, dem symmetrischen Komplex von (II)-B und dem unsymmetrischen Komplex aus (II)-A und (II)-B.

Bevorzugte Farbstoffe II-A sind solche der Formel

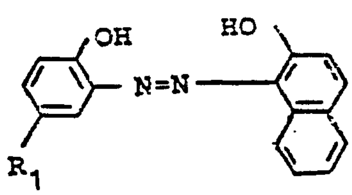

Bevorzugte Farbstoffe der Formel II-B sind solche der Formel

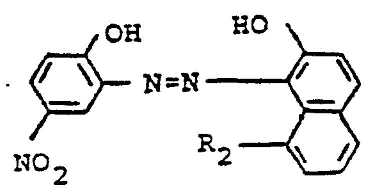

worin $R_1$ = Alkylsulfonyl oder Sulfonamid und $R_2$ = Acylamino.

Durch Variieren des Mengenverhältnisses von (II)-A und (II)-B lassen sich Zusammensetzung und Eigenschaften des Chromierungsgemisches beeinflussen. Vorzugsweise setzt man die Farbstoffe (II)-A und (II)-B im Molverhältnis von 30 : 70 bis 70 : 30, insbesondere von 45 : 55 bis 55 : 45 ein.

Die Metallisierung erfolgt unter den üblichen Bedingungen. Hierzu werden die Farbstoffe in Wasser, in einem Gemisch aus Wasser und einem organischen Lösungsmittel oder in einem organischen Lösungsmittel allein vorzugsweise bei 80 bis 100 °C und einem pH-Wert von 6 bis 9 mit chromabgebenden und säurebindenden Mitteln behandelt. Als organische Lösungsmittel eignen sich niedere Alkohole, wie Ethanol, Carbonamide, wie Formamid, Dimethylformamid oder N-Methylpyrrolidon, Glykole und vor allem Etheralkohole, beispielsweise die Additionsprodukte von $C_1$-$C_4$-Alkoholen an Ethylen- und Propylenoxid. Als chromabgebende Mittel kommen z. B. Chrom(III)-chlorid, -sulfat, -acetat oder Natriumchromsalicylat in Frage. Geeignete säurebindende Mittel sind vor allem die Hydroxide oder Carbonate der unter Formel (I) angegebenen Ionen $Ka^{(+)}$.

Die erfindungsgemäßen 1 : 2-Chromkomplexfarbstoff-Mischungen zugrundeliegenden Farbstoffe werden auf dem üblichen Weg aus den Kupplungskomponenten

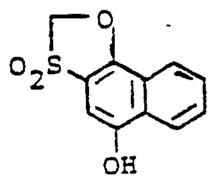
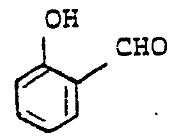
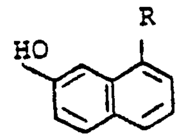

(IV) (V) (VI)

und den Aminen

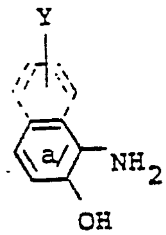
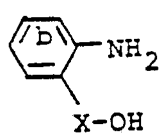
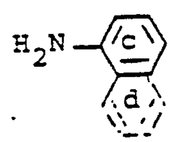

(VII) (VIII) (IX)

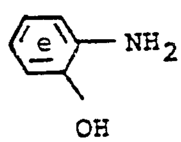

(X)

gewonnen.

Beispiele für Amine der Formel (X) sind :
2-Amino-1-hydroxybenzol,
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor-, 4-Methyl- oder 4-Acetylamino-6-nitro-2-amino-1-hydroxybenzol,
6-Chlor-, 6-Methyl- oder 6-Acetylamino-4-nitro-2-amino-1-hydroxybenzol,
4-Chlor-6-acetylamino-2-amino-1-hydroxybenzol,
4-Chlor-5-nitro-2-amino-1-hydroxybenzol,
4- oder 5-Methyl-2-amino-1-hydroxybenzol,
2-Amino-1-hydroxybenzol-4- oder -5-methylsulfon,
2-Amino-1-hydroxybenzol-4- oder -5-ethylsulfon,
2-Amino-1-hydroxybenzol-4- oder -5-sulfonamid,
2-Amino-1-hydroxybenzol-4- oder -5-sulfomethylamid,
2-Amino-1-hydroxybenzol-4- oder -5-sulfodimethylamid,
4-Nitro-2-amino-1-hydroxybenzol-5- oder -6-sulfonamid.

Beispiele für Amine der Formel (VII) sind die oben unter (X) stehenden Amine und die folgenden sulfogruppenhaltigen Amine :
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,
2-Amino-1-hydroxynaphthalin-4-sulfonsäure,
1-Amino-2-hydroxynaphthalin-4-sulfonsäure,
6-Nitro- oder 6-Methyl-1-amino-2-hydroxynaphthalin-4-sulfonsäure.

Beispiele für Amine der Formel (VIII) sind die von Benzol abgeleiteten Amine der Formel (VII) mit den Substituenten Sulfonamid, Cl, $NO_2$, $CH_3$ oder Sulfo, weiterhin
2-Aminobenzoesäure,

2-Aminobenzoesäure-4- oder -5-sulfonsäure,
2-Aminobenzoesäure-4- oder -5-sulfonamid,
4-, 5- oder 6-Chlor-2-aminobenzoesäure,
3,5-Dichlor-2-aminobenzoesäure,
4- oder 5-Nitro-2-aminobenzoesäure.

Als Amine (IX) kommen beispielsweise in Betracht :
2-, 3- oder 4-Chloranilin,
2,4-, 2,5- oder 3,5-Dichloranilin,
2-, 3- oder 4-Methylanilin,
2,4- oder 2,5-Dimethylanilin,
2-Chlor-5-methylanilin,
2,4-Dichlor-5-methylanilin,
2-, 3- oder 4-Methoxyanilin,
2-Methoxy-5-methylanilin,
Anilin-2-, -3- oder -4-sulfonsäure,
2-Chloranilin-4-sulfonsäure,
2,5-Dichloranilin-4-sulfonsäure,
2-Methyl- oder 2-Methoxyanilin-5-sulfonsäure,
4-Methoxyanilin-2-sulfonsäure,
2-Methylanilin-4-sulfonsäure,
Anilin-3- oder -4-sulfonamid,
2-Methoxy- oder 2-Chloranilin-5-sulfonamid,
1-Naphthylamin,
1-Naphthylamin-4-, -5-, -6- oder -7-sulfonsäure,
2-Naphthylamin-1-, -5-, -6- -7- oder -8-sulfonsäure.

Geeignete Kupplungskomponenten der Formel (VI) sind beispielsweise :
2-Hydroxynaphthalin,
1-Acetylamino-7-hydroxynaphthalin,
1-Methoxycarbonylamino- oder 1-Ethoxycarbonylamino-7-hydroxy-naphthalin,
1-Methylsulfonylamino- oder 1-Ethylsulfonylamino-7-hydroxynaphthalin.

Die 1 : 2-Chromkomplexfarbstoffe der beiden Komponenten können durch Aussalzen oder Sprühtrocknen in Form ihrer unter Formel (I) angegebenen Salze isoliert und mit den üblichen Hilfs- und Stellmitteln zu wasserlöslichen oder in Wasser dispergierbaren Präparationen verarbeitet werden. Sie können aber auch nach dem Verfahren der Deutschen Offenlegungsschrift 2 443 483, bei dem Farbstoffe in hydroxylgruppenhaltigen Lösungsmitteln in Gegenwart alkalisch wirkenden Lithiumsalze metallisiert werden, in die konzentrierten lagerstabilen Lösungen ihrer Lithiumsalze überführt werden. Das Vermischen der beiden Komponenten kann vor oder nach dem Trocknen, im einfachsten Fall aber durch Verrühren ihrer Lösungen erfolgen.

Bevorzugte Mischungen enthalten 10 bis 50 Mol %, insbesondere 15 bis 35 Mol %, der Komponente (I) und 90 bis 50 Mol %, insbesondere 85 bis 65 Mol %, der schwarzen oder grauen Komponente (II).

Die erfindungsgemäßen Farbstoffmischungen eignen sich zum Färben von synthetischen und natürlichen stickstoffhaltigen Materialien, wie Polyamid- und Polyurethanfaser, Wolle, Seide und vor allem Leder. Zum Färben von Leder sind besonders die Lösungen der Lithiumsalze geeignet, die sich universell sowohl in der Faßfärbung als auch in der Maschinenfärbung und Zurichtung einsetzen lassen. Die Farbstoffgemische zeichnen sich durch eine hohe und in den Komponenten übereinstimmende Farbstoff-Leder-Bindung aus. Die Färbungen bleiben konstant in der Nuance und weisen gute Echtheiten auf, wie Wassertropfen-, Schweiß-, Reib-, Diffusions- und Lichtechtheit. Hervorzuheben ist das gute Aufbauvermögen sowohl auf nur mit Chromsalzen gegerbtem Leder als auch auf mit vegetabilen oder synthetischen Gerbstoffen nachgegerbtem Leder ; dabei ziehen die beiden Komponenten in einem breiten Konzentrationsbereich gleichmäßig auf, so daß sich das Remissionsspektrum bei unterschiedlichen Konzentrationen qualitativ nicht verändert.

## Beispiel 1

a) Schwarze Komponente

0,6 Mol Monoazofarbstoff aus diazotiertem 2-Amino-1-hydroxybenzol-4-ethylsulfon und 2-Naphthol werden in 3 Liter Wasser durch Zusatz von etwa 90 ml 10 n Natronlauge und durch Erwärmen gelöst. In die siedende Lösung läßt man innerhalb von 15 Minuten die Lösung von 44,7 g Natriumdichromat ($Na_2Cr_2O_7 \cdot 2H_2O$ MG = 298) und 59,4 g Traubenzucker in 400 ml Wasser zutropfen und hält das Ganze etwa 30 Minuten auf Rückflußtemperatur, bis die Reaktion zum 1 : 2-Chromkomplexfarbstoff der Formel

(Siehe Formel Seite 6 f.)

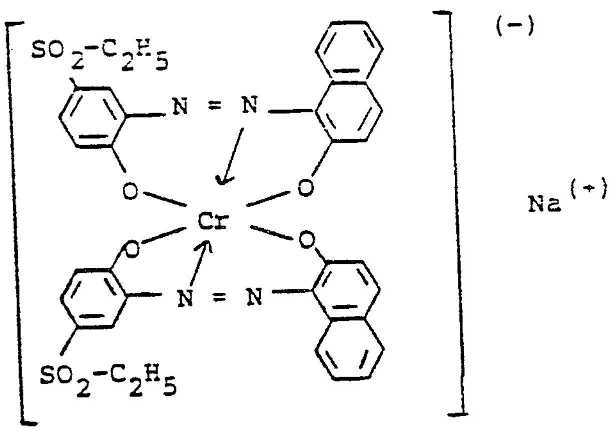

beendet ist.

b) Grüne Komponente

In 2 Liter Wasser werden 0,2 Mol 2-Amino-1-hydroxybenzol-4-sulfonamid, 0,2 Mol Azofarbstoff aus diazotiertem p-Chloranilin und Salicylaldehyd und 0,2 Mol des aus diazotierter 4-Chlor-2-amino-1-hydroxybenzol-6-sulfonsäure, 4'-Hydroxynaphtho-(2',1' : 4,5)-oxathiazol-S-dioxid und 53,3 g $CrCl_3 \cdot 6H_2O$ gewonnenen 1 : 1-Chromkomplexes miteinander verrührt. Man Erwärmt auf 85 °C und hält dabei den pH durch tropfenweise Zugabe von etwa 40 ml 10 n Natronlauge im Bereich von 7-8. Das Erwärmen auf 85 °C bei pH 7-8 wird noch 2 Stunden fortgeführt, bis die Ausgangsverbindungen sich vollständig zum Chrommischkomplexfarbstoff der Formel

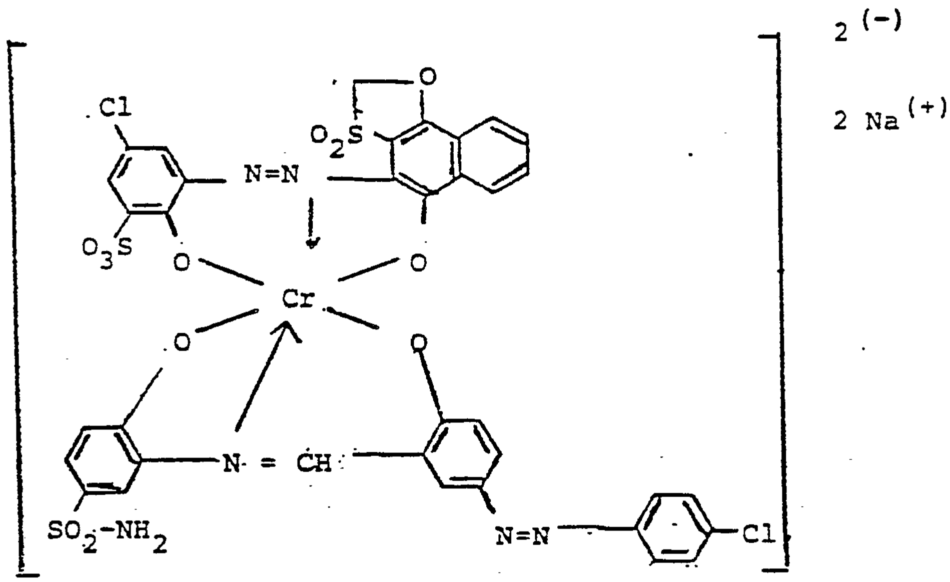

umgesetzt haben.

Die Reaktionsmischungen a) und b) werden nun vereinigt, miteinander verrührt und mit Kochsalz nahezu vollständig gefällt. Nach dem Filtrieren und Trocknen erhält man ein schwarzes, in Wasser gut lösliches Pulver, welches Leder in grauen Nuancen färbt.

Beispiel 2

a) Schwarze Komponente

0,4 Mol Monoazofarbstoff aus diazotiertem 4-Nitro-2-amino-1-hydroxybenzol und 1-Acetylamino-7-naphthalin und 0,4 Mol Monoazofarbstoff aus diazotiertem 2-Amino-1-hydroxybenzol-4-sulfonamid und 2-Naphthol werden in 1,8 Liter Ethylglykol verrührt. Man setzt 67,2 g Lithiumhydroxid ($LiOH \cdot H_2O$) zu, erwärmt auf 100 °C und läßt innerhalb von 15 Minuten 210 g wäßrige Chromacetatlösung (14,5 % $Cr_2O_3$) zulaufen. Man hält die Temperatur noch eine halbe Stunde auf 100 °C und läßt die Lösung, die nun die drei folgenden 1 : 2-Chromkomplexfarbstoffe

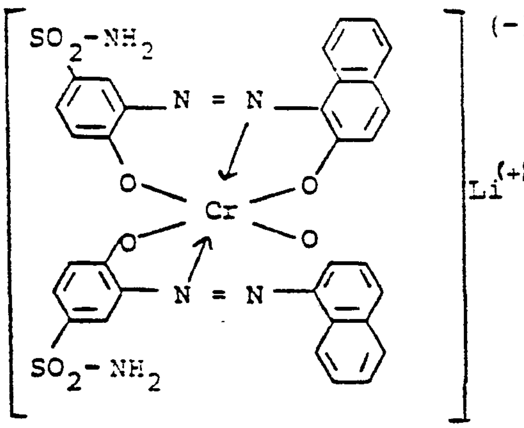

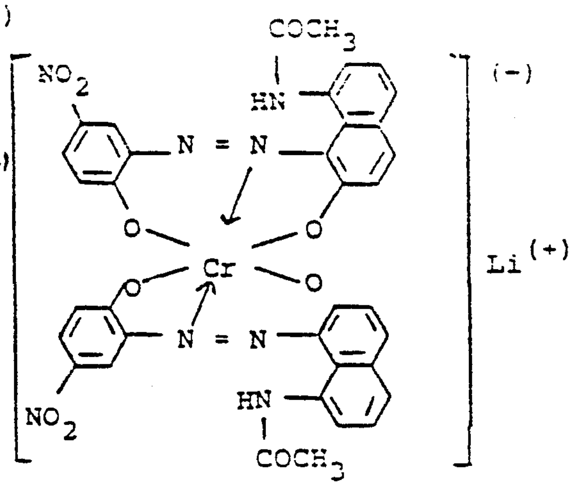

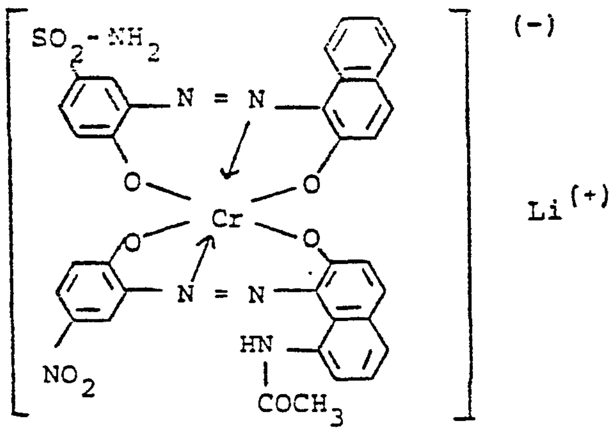

enthält, über Nacht auf Raumtemperatur abkühlen, trennt die ausgefallenen Elektrolyte durch Filtration ab und verdünnt mit 500 ml Wasser.

b) Grüne Komponente

In einem Liter Ethylglykol werden 0,1 Mol 4-Chlor-2-aminobenzoesäure gelöst. Man setzt 0,1 Mol Azofarbstoff aus diazotiertem 2,4-Dichloranilin und Salicylaldehyd und 0,1 Mol 1 : 1-Chromkomplexfarbstoff aus diazotierter 4-Chlor-2-amino-1-hydroxybenzol-6-sulfonsäure, 4'-Hydroxynaphtho-(2',1' : 4,5)-oxathiazol-S-dioxid und 26,7 g $CrCl_3 \cdot 6H_2O$ zu, erwärmt das Gemisch auf 80 °C und hält dabei den pH durch Zusatz von insgesamt 8,4 g $LiOH \cdot H_2O$ bei 7-8. Nach 30 Minuten ist der Chrommischkomplex der folgenden Formel entstanden :

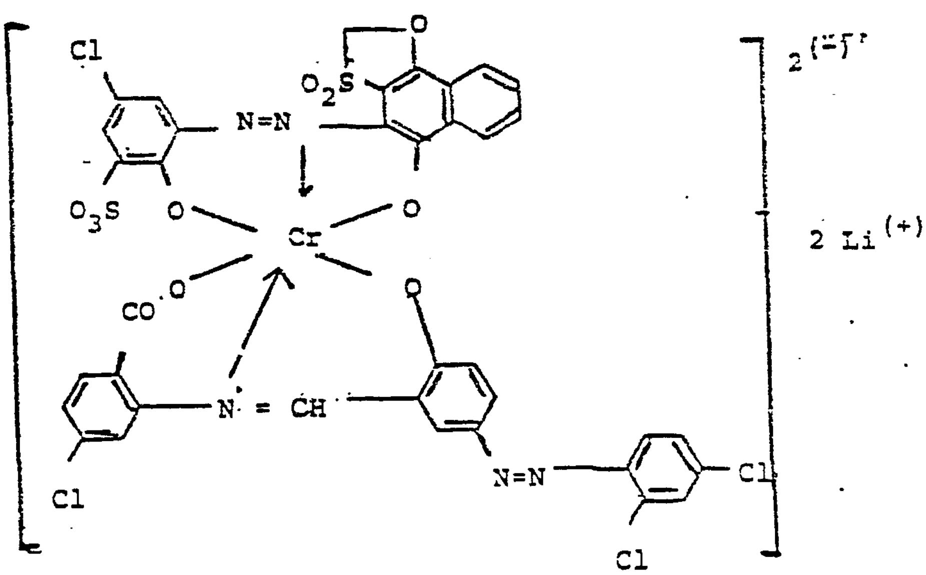

Die Lösung wird am nächsten Morgen geklärt und mit 300 ml Wasser verdünnt.

Durch Vermischen der Lösungen beider Komponenten erhält man eine lagerstabile schwarze Lösung, mit der man bei der Faßfärbung, Maschinenfärbung und Zurichtung interessante Grautöne auf Leder erzielen kann.

Beispiel 3

Zu einer Lösung mit ähnlichen Eigenschaften gelangt man, wenn man den grünen Farbstoff des Beispiels 2 gegen den folgenden Farbstoff

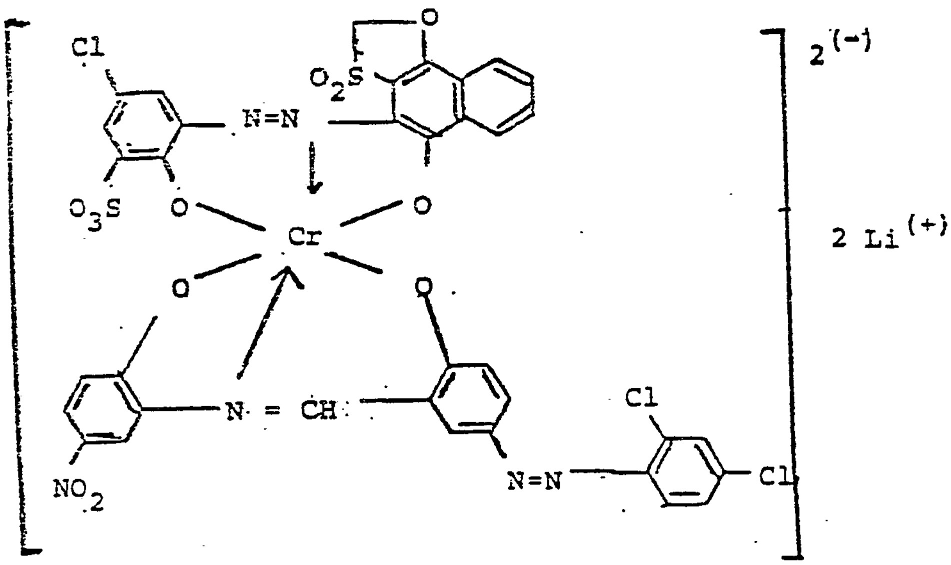

austauscht und diese Lösung mit der schwarzen Lösung des Beispiels 2 vermischt.

**Patentansprüche**

1. Mischungen von Farbstoffen der Formel I

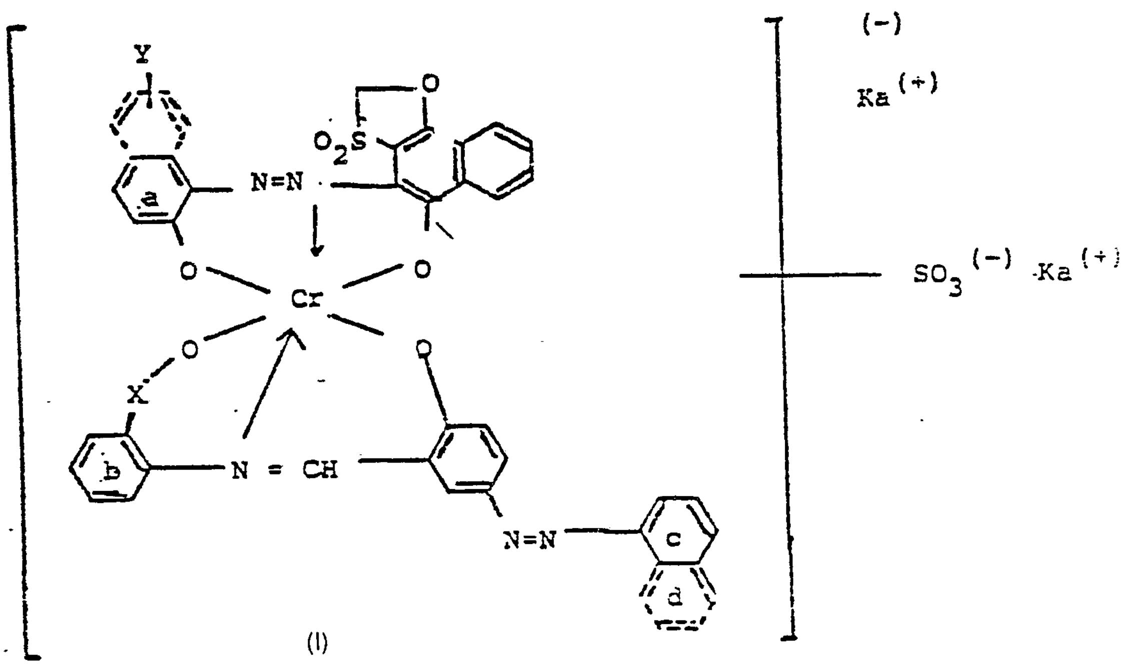

(I)

worin

X für CO oder eine direkte Bindung

Y für H oder $NO_2$ stehen,

Ring a durch Sulfonamid, $C_1$-$C_4$-Alkylsulfonyl, Cl, $NO_2$, $C_1$-$C_4$-Alkyl oder Acylamino,
Ring b durch Sulfonamid, Cl, $NO_2$ oder $C_1$-$C_4$-Alkyl und
Ring c durch Sulfonamid, Cl, $C_1$-$C_4$-Alkyl oder $C_1$-$C_4$-Alkoxy substituiert sein kann, die $SO_3^{(-)}Ka^{(+)}$-Gruppe an den Ringen a, b, c und d gebunden sein kann und $Ka^{(+)}$ ein Kation bedeutet, mit 1 : 2-Chromkomplexverbindungen von Farbstoffen der Formel (II)

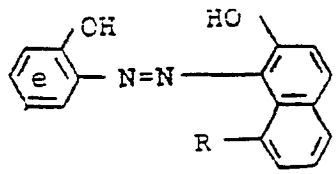
(II)

worin
R für H oder Acylamino steht und
Ring e durch Sulfonamid, $C_1$-$C_4$-Alkylsulfonyl, Cl, $NO_2$, $C_1$-$C_4$-Alkyl oder Acylamino substituiert sein kann.

2. Mischungen gemäß Anspruch 1 in denen Farbstoff I der Formel

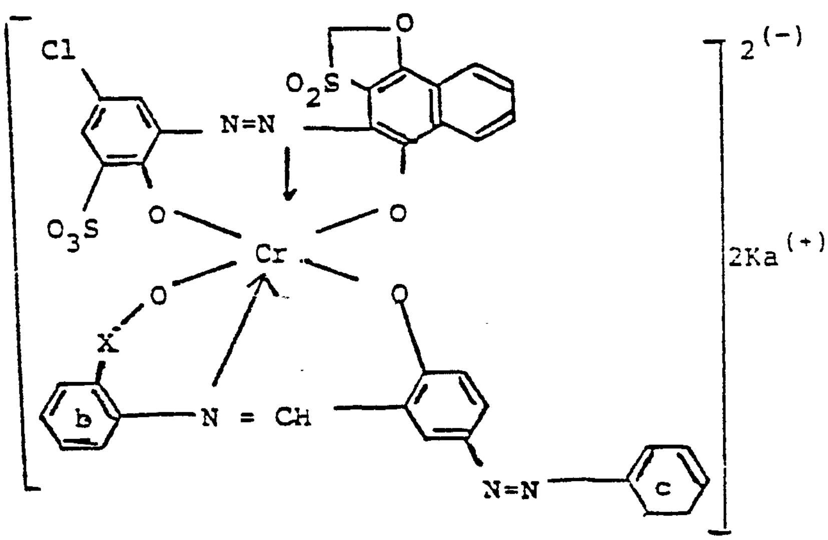

entspricht.

3. Mischungen gemäß Ansprüchen 1 und 2 in denen Farbstoff II ein durch Mischchromierung der Farbstoffe der Formel

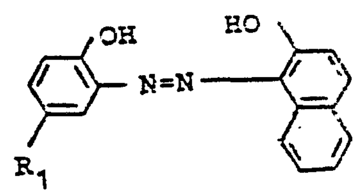

und

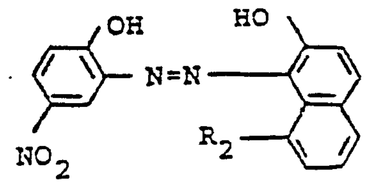

worin
$R_1$ = $C_1$-$C_4$-Alkylsulfonyl oder Sulfonamid und
$R_2$ = Acylamino
erhältliches Farbstoffgemisch darstellt.

4. Mischungen gemäß Ansprüchen 1-3, die 10-50 Mol %, insbesondere 15-35 Mol % Farbstoff I und 90-50 Mol %, insbesondere 85-65 Mol % Farbstoff II enthalten.

5. Verwendung der Mischungen der Ansprüche 1-4 zum Färben von natürlichen und synthetischen stickstoffhaltigen Materialien.

6. Mit den Mischungen der Ansprüche 1-4 gefärbte natürliche oder synthetische stickstoffhaltige Materialien.

**Claims**

1. Mixtures of dyestuffs of the formula I

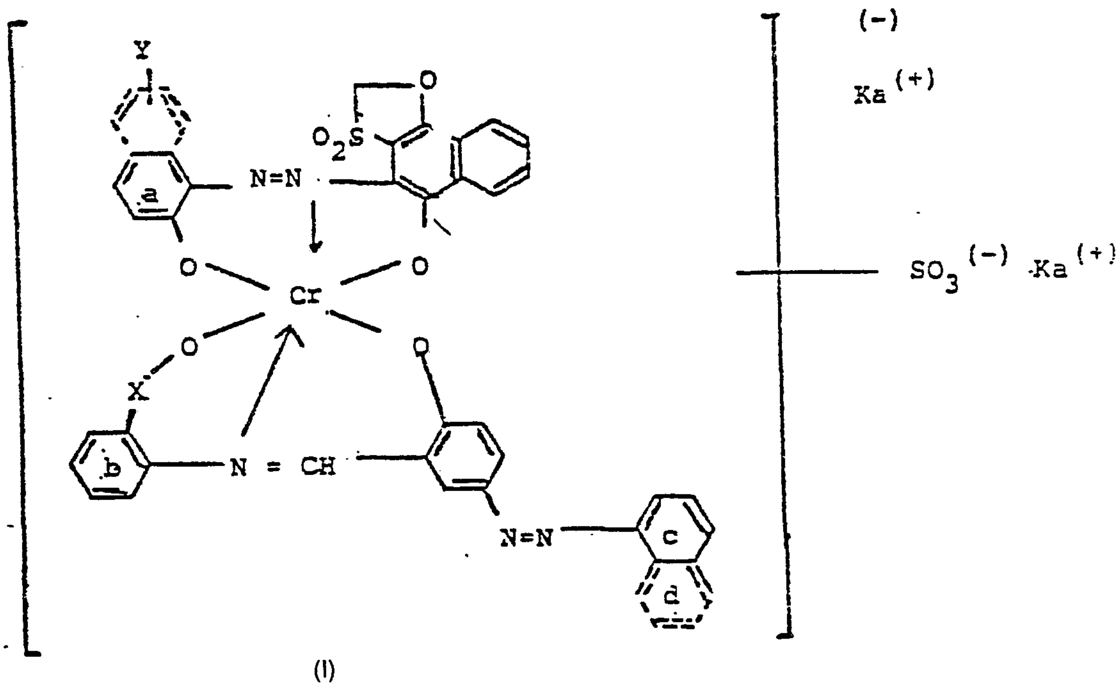

(I)

wherein

X represents CO or a direct bond,

Y represents H or $NO_2$,

ring a can be substituted by sulphonamide, $C_1$-$C_4$-alkylsulphonyl, Cl, $NO_2$, $C_1$-$C_4$-alkyl or acylamino,

ring b can be substituted by sulphonamide, Cl, $NO_2$ or $C_1$-$C_4$-alkyl and

ring c can be substituted by sulphonamide, Cl, $C_1$-$C_4$-alkyl or $C_1$-$C_4$-alkoxy, the $SO_3^{(-)}Ka^{(+)}$ group can be bonded to the rings a, b, c and d and $Ka^{(+)}$ denotes a cation,

with 1 : 2 chromium complex compounds of dyestuffs of the formula (II)

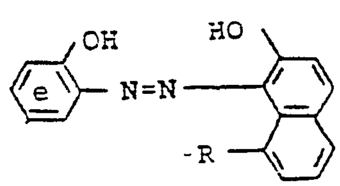

wherein

R represents H or acylamino and

ring e can be substituted by sulphonamide, $C_1$-$C_4$-alkylsulphonyl, Cl, $NO_2$, $C_1$-$C_4$-alkyl or acylamino.

2. Mixtures according to Claim 1 in which dyestuff I corresponds to the formula

(See Formula page 11 )

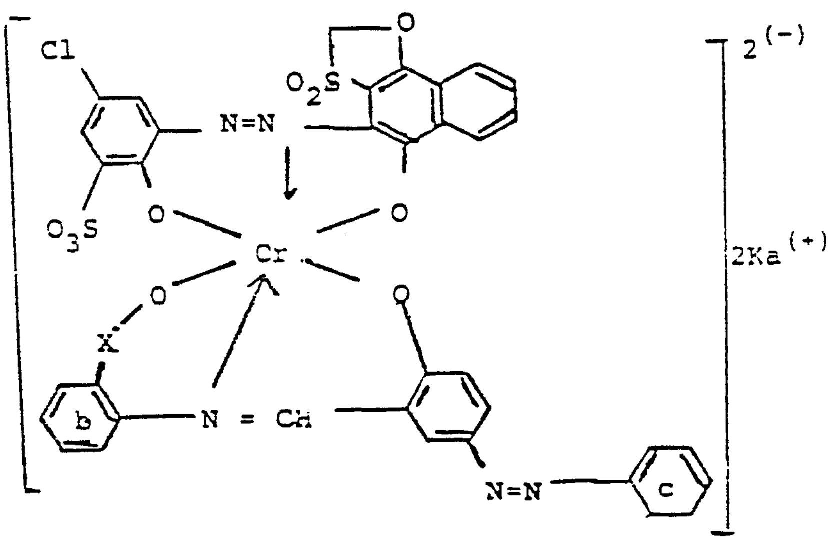

3. Mixtures according to Claims 1 and 2, in which dyestuff II represents a dyestuff mixture obtainable by the mixed chroming of dyestuffs of the formula

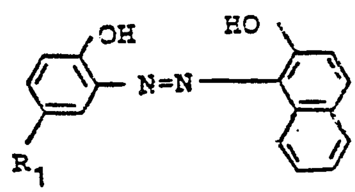

and

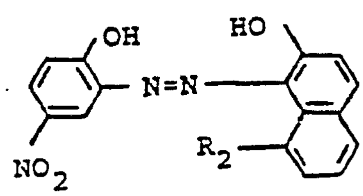

wherein

$R_1$ = $C_1$-$C_4$-alkylsulphonyl or sulphonamide and

$R_2$ = acylamino.

4. Mixtures according to Claims 1-3 which contain 10-50 mol %, in particular 15-35 mol % of dyestuff I and 90-50 mol %, in particular 85-65 mol % of dyestuff II.

5. Use of the mixtures of Claims 1-4 for dyeing natural and synthetic nitrogen-containing materials.

6. Natural or synthetic nitrogen-containing materials dyed with the mixtures of Claims 1-4.

**Revendications**

1. Mélanges de colorants de formule I

(Voir formule I page 12)

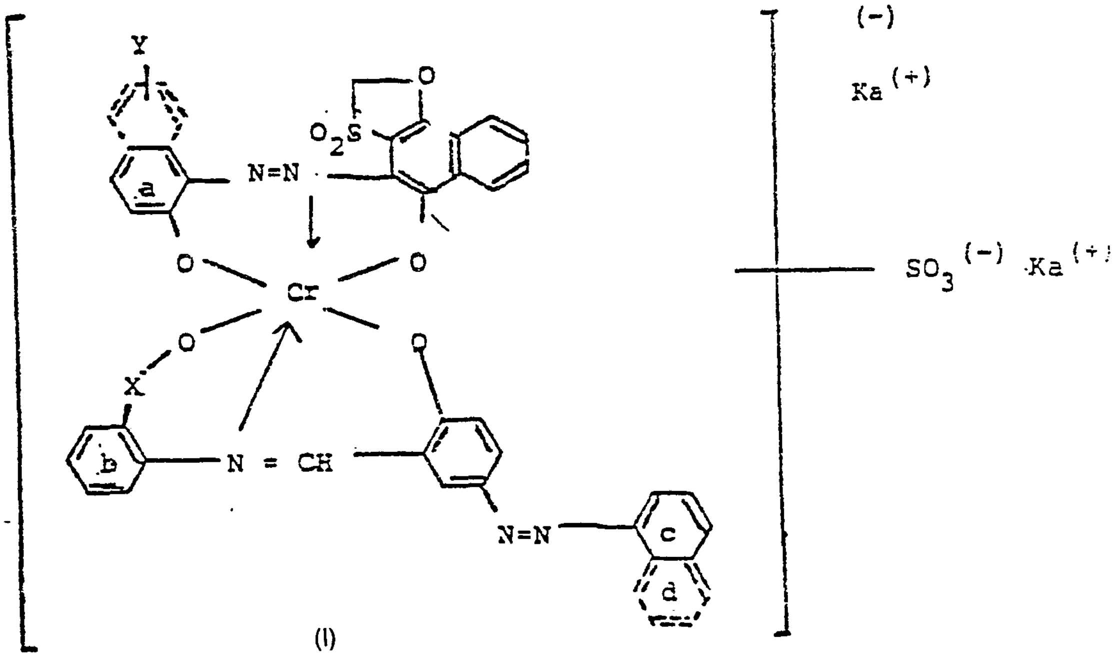

(I)

dans laquelle

X représente CO ou une liaison directe,

Y représente H ou $NO_2$,

le cycle a peut être substitué par des groupes sulfonamide, alkylsulfonyle en $C_1$-$C_4$, Cl, des groupes $NO_2$, alkyle en $C_1$-$C_4$ ou acylamino,

le cycle b peut être substitué par des groupes sulfonamide, Cl, des groupes $NO_2$ ou alkyle en $C_1$-$C_4$ et

le cycle c peut être substitué par des groupes sulfonamide, Cl, des groupes alkyle en $C_1$-$C_4$ ou alcoxy en $C_1$-$C_4$, le groupe $SO_3^{(-)}Ka^{(+)}$ peut être relié aux cycles a, b, c et d, et $Ka^{(+)}$ représente un cation, avec des complexes de chrome 1 : 2 de colorants de formule II,

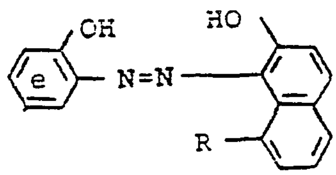

(II)

dans laquelle

R représente H ou un groupe acylamino et

le cycle e peut être substitué par des groupes sulfonamide, alkylsulfonyle en $C_1$-$C_4$, Cl, des groupes $NO_2$, alkyle en $C_1$-$C_4$ ou acylamino.

2. Mélanges selon la revendication 1, dans lesquels le colorant I répond à la formule

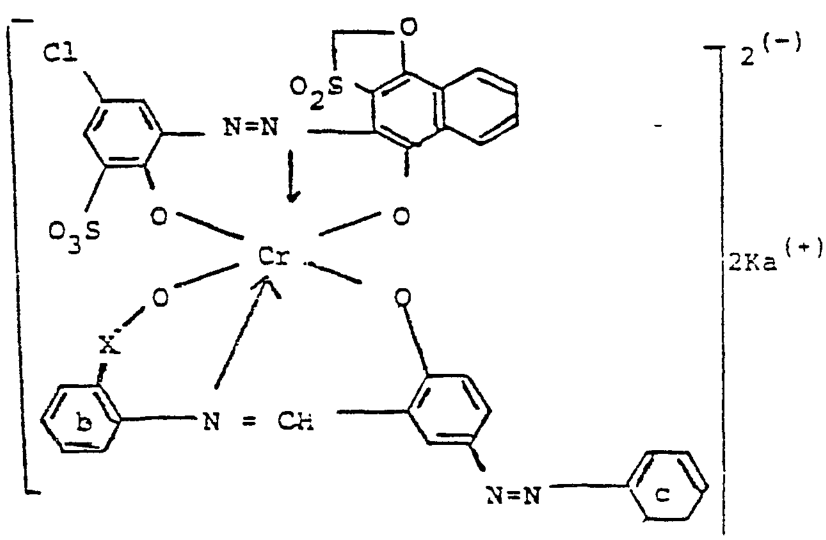

3. Mélanges selon les revendications 1 et 2, dans lesquels le colorant II est en fait un mélange de colorants qu'on obtient par chromage en mélange des colorants de formule

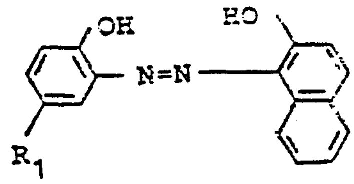

et

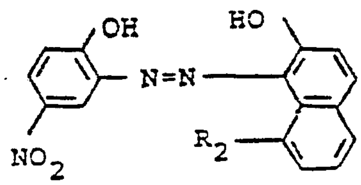

dans lesquels

$R_1$ représente un groupe alkylsulfonyle en $C_1$-$C_4$ ou sulfonamide et

$R_2$ représente un groupe acylamino.

4. Mélanges selon les revendications 1 à 3, contenant 10 à 50 moles %, plus spécialement 15 à 35 moles %, du colorant I et 90 à 50 moles %, plus spécialement 85 à 65 moles %, du colorant II.

5. Utilisation des mélanges des revendications 1 à 4 pour la teinture de matières azotées naturelles et synthétiques.

6. Matières azotées naturelles ou synthétiques teintes à l'aide des mélanges des revendications 1 à 4.